(19) Europäisches Patentamt
European Patent Office
Office européen des brevets

(11) EP 3 467 201 A1

(12) EUROPEAN PATENT APPLICATION
published in accordance with Art. 153(4) EPC

(43) Date of publication:
**10.04.2019 Bulletin 2019/15**

(21) Application number: **17806161.0**

(22) Date of filing: **28.03.2017**

(51) Int Cl.:
***D21H 11/18*** (2006.01) ***C08B 15/08*** (2006.01)

(86) International application number:
**PCT/JP2017/012627**

(87) International publication number:
**WO 2017/208600 (07.12.2017 Gazette 2017/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.06.2016 JP 2016111799**

(71) Applicant: **KRI, Inc.**
**Kyoto-shi, Kyoto 600-8813 (JP)**

(72) Inventors:
- **LIN Lianzhen**
  **Kyoto-shi**
  **Kyoto 600-8813 (JP)**
- **MARUTA Ayako**
  **Kyoto-shi**
  **Kyoto 600-8813 (JP)**
- **HORI Masanori**
  **Kyoto-shi**
  **Kyoto 600-8813 (JP)**

(74) Representative: **Müller-Boré & Partner Patentanwälte PartG mbB**
**Friedenheimer Brücke 21**
**80639 München (DE)**

# (54) METHOD FOR PRODUCING CELLULOSE FINE FIBER

(57) Provided is a method of producing cellulose fine fibers that are nanosized, that have a high crystallinity degree, and that are less vulnerable to fiber shape damage, the method including impregnating cellulose with a fibrillation solution containing formic acid to fibrillate the cellulose without vigorous mechanical crushing. Also provided is a method of producing surface-modified cellulose fine fibers including modifying cellulose. The method of producing cellulose fine fibers of the present invention includes impregnating the cellulose with formic acid, a high-concentration formic acid aqueous solution, or a solution containing, in an aprotic solvent having a donor number of 26 or more, formic acid or a high-concentration formic acid aqueous solution serving as a fibrillation solution to fibrillate the cellulose. In addition, the method of producing surface-modified cellulose fine fibers of the present invention has a feature in that: the fibrillation solution further contains a modification reaction agent; and the method includes impregnating the cellulose with the fibrillation solution to modify the surfaces of cellulose fine fibers while fibrillating the cellulose.

[Fig.1]

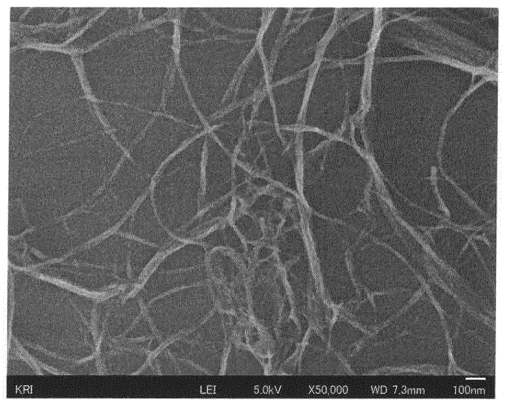


EP 3 467 201 A1

## Description

Technical Field

The present invention relates to a method of producing cellulose fine fibers.

Background Art

A cellulose fiber (cell wall unit) is an assembly of cellulose fine fiber (microfibrils). The microfibrils have been socially attracting close attention as a reinforcing material because the microfibrils have mechanical characteristics comparable to those of steel and have nanostructures each having a diameter of about 20 nm. However, the fine fibers are bound together through hydrogen bonds therebetween. Accordingly, in order that the fine fibers may be drawn out, the hydrogen bonds need to be cleaved to separate the microfibrils (referred to as "fibrillation"). Accordingly, a mechanical fibrillation method involving applying an intense physical force has been developed.

A method involving performing production by an underwater mechanical fibrillation method has been known as a method of producing cellulose nanofibers. In the method, cellulose is swollen with water to be brought into a soft state, and is fibrillated into nanofibers by strong mechanical shearing with, for example, a high-pressure homogenizer. Natural cellulose microfibrils each include a crystalline zone and a noncrystalline zone, and when the noncrystalline zone absorbs a swelling solvent, such as water, to be brought into a swollen state, the zone is deformed by strong shearing. Accordingly, damage is present in the resultant cellulose fine fibers, and hence the fine fibers are of such shapes as to be liable to be entangled and caught with each other.

In addition, a strong mechanical pulverization method involving using, for example, a ball mill causes a mechanochemical reaction intrinsic to a solid state. The action makes the breakage or dissolution of the crystal structure of the cellulose inevitable. As a result, a yield reduces and a crystallinity degree may reduce.

Another problem of the underwater fibrillation is that in order that the resultant cellulose fine fibers and a resin may be composited with each other, after the fibrillation, the cellulose microfibrils need to be dehydrated and subjected to surface hydrophobic modification. The dehydration step requires high energy.

In addition, a method involving swelling and/or partially dissolving a cellulose-based substance with a mixed solvent containing an ionic liquid and an organic solvent, and then esterifying the resultant has been known as a method of producing cellulose fine fibers having esterified surfaces (Patent Literature 1). However, when the mixed solvent containing the ionic liquid and the organic solvent of Patent Literature 1 is used, there occurs a problem in that cost concerning the recovery and reuse of the ionic liquid is high.

In addition, with regard to the method of producing cellulose fine fibers having esterified surfaces, in Patent Literature 2, there is a disclosure of a method involving mixing cellulose and an organic solvent, adding an esterifying agent to the mixture, and then performing an esterification reaction together with strong mechanical crushing to esterify and dissociate the surface of the cellulose. However, in themethodof Patent Literature 2, a solution for fibrillation that contains the esterifying agent and the organic solvent to be used as described in Examples thereof has low impregnability into the cellulose, and hence the organic solvent and the esterifying agent can be hardly impregnated into the cellulose during mechanical pulverization treatment. Accordingly, the production method is not chemical fibrillation but a mechanical fibrillation method requiring a strong mechanical force. Strong mechanical crushing involves the same problems as those described above because the crushing may damage cellulose nanofibers. In addition, the organic solvent and the esterifying agent more hardly enter a deeper portion of a pulp fiber from its surface, and hence the inside of the pulp fiber is hardly subjected to esterification modification. Accordingly, it can be assumed that fine fibers in the pulp fiber are fibrillated by mechanical fibrillation, but their surfaces can be hardly modified. In addition, in Patent Literature 3, there is a disclosure of a method of producing cellulose fine fibers modified with a surface aromatic substituent. However, cellulose cannot be fibrillated by the chemical modification step alone, and hence a strong mechanical fibrillation step is required.

Citation List

Patent Literature

[PTL 1] JP 2010-104768 A
[PTL 2] JP 2015-500354 A
[PTL 3] JP 2011-16995 A

## Summary of Invention

### Technical Problem

The present invention provides a method of producing cellulose fine fibers that are nanosized, that have a high crystallinity degree, and that are less vulnerable to fiber shape damage, the method being an energy- saving method that does not require any strong physical pulverization, and a method of producing modified cellulose fine fibers formed of such fine fibers.

### Solution to Problem

The inventors of the present invention have made extensive investigations for achieving the object, and as a result, have found a method of producing cellulose fine fibers that are nanosized, that have a high crystallinity degree, and that are less vulnerable to fiber shape damage, the method including impregnating cellulose with formic acid, a high-concentration formic acid aqueous solution, or a fibrillation solution containing, in an aprotic solvent having a donor number of 26 or more, formic acid or a high-concentration formic acid aqueous solution to fibrillate the cellulose without strong fibrillation with, for example, a high-pressure homogenizer or a water jet.

That is, the present invention has a feature of including the following constructions, and solves the above-mentioned problems.

[1] A method of producing cellulose fine fibers, including impregnating cellulose with formic acid or a high-concentration formic acid aqueous solution to fibrillate the cellulose.

[2] A method of producing cellulose fine fibers, including impregnating cellulose with a fibrillation solution containing an aprotic solvent having a donor number of 26 or more and formic acid or a high-concentration formic acid aqueous solution to fibrillate the cellulose.

[3] A method of producing surface-modified cellulose fine fibers, including impregnating cellulose with a modification-reactive fibrillation solution, which is obtained by adding a cellulose modification reaction agent to formic acid, a high-concentration formic acid aqueous solution, or the fibrillation solution of the above-mentioned item [2], to fibrillate the cellulose.

[4] The production method according to the above-mentioned item [3], wherein the cellulose modification reaction agent includes at least one kind selected from a carboxylic acid halide, a carboxylic acid anhydride, a carboxylic acid, an isocyanate, and an epoxy.

[5] The production method according to any one of the above-mentioned items [1] to [4], wherein a weight ratio of the cellulose to the formic acid or the high-concentration formic acid aqueous solution, of the cellulose to the fibrillation solution of the above-mentioned item [2], or of the cellulose to the modification-reactive fibrillation solution of the above-mentioned item [3] is from 0.5/99.5 to 25/75.

### Advantageous Effects of Invention

In the present invention, the cellulose is fibrillated by impregnating the cellulose with the fibrillation solution containing the formic acid or the high-concentration formic acid aqueous solution without strong fibrillation with, for example, a high-pressure homogenizer or a water jet. Accordingly, damage to cellulose microfibrils is reduced, and hence cellulose fine fibers having a large aspect ratio can be produced.

Further, surface-modified cellulose fine fibers can be produced by adding the modification reaction agent to the fibrillation solution to subject hydroxy groups on the surfaces of the microfibrils to a modification reaction. The fibrillation solution is impregnated into the cellulose to modify the surfaces of the microfibrils while cleaving hydrogen bonds between fibers, between lamellae, and between the microfibrils, and hence the cellulose is fibrillated without the breakage of the crystal structure of naturally-derived cellulose and microfibril structures, and the surfaces of the microfibrils can be efficiently modified. Accordingly, cellulose fine fibers that are nanosized, that have a high crystallinity degree, that are less vulnerable to fiber shape damage, that have a large aspect ratio, and that are each excellent in redispersibility in a solvent or a resin after its drying can be simply and efficiently produced by an energy-saving method. In addition, the fibrillation solution of the present invention can not only fibrillate the cellulose but also cause the hydroxy groups on the surfaces of the cellulose fine fibers to react with various modification reaction agents. Accordingly, various modification functional groups can be introduced in accordance with applications. For example, the introduction of a hydrophobic

functional group can further improve an affinity between the cellulose fine fibers and an organic medium, such as a resin. In addition, when a terminal of a modification functional group is modified with a modification reaction agent having a reactive group, such as an acrylic group, an epoxy group, an isocyanate group, or a vinyl group, the surfaces of the cellulose fine fibers to be obtained have reactive groups. Accordingly, the functionality and applications of the fine fibers can be further extended. For example, an improvement in reinforcing effect can be expected from an improvement in interfacial adhesive property by the occurrence of a chemical reaction between the cellulose fine fibers and a resin at the time of their compositing.

Further, in the method of producing cellulose fine fibers of the present invention, a cellulose substance can be fibrillated without the use of mechanical fibrillation means based on the action of a strong shear force. Accordingly, the resultant cellulose fine fibers have structures close to those of natural microfibrils and are less vulnerable to damage, and hence each have high strength.

Further, the formic acid brings together properties as a swelling solvent, a fibrillation aid, and a modification reaction catalyst, and hence the cellulose can be fibrillated with the single component. Further, the addition of the modification reaction agent enables simultaneous performance of the surface modification and the fibrillation. Further, the formic acid has a low boiling point, and hence processes for the purification and recovery of the cellulose fine fibers are simple and energy-saving.

Brief Description of Drawings

FIG. 1 is a SEM image of fine fibers obtained in Example 1.

FIG. 2 is a SEM image of fine fibers obtained in Example 2.

FIG. 3 is a SEM image of fine fibers obtained in Example 3.

FIG. 4 is a SEM image of fine fibers obtained in Example 4.

FIG. 5 is a SEM image of fine fibers obtained in Example 5.

FIG. 6 is a SEM image of fine fibers obtained in Example 6.

Description of Embodiments

A method of producing cellulose fine fibers of the present invention has a feature of including impregnating cellulose with formic acid, a high-concentration formic acid aqueous solution, or a fibrillation solution containing formic acid or a high-concentration formic acid aqueous solution (the foregoing are hereinafter sometimes collectively referred to as "fibrillation solution") to fibrillate the cellulose without mechanical crushing so that the cellulose may be fibrillated so as to be nanosized, to have a high crystallinity degree, and to be less vulnerable to fiber shape damage.

The cellulose serving as a raw material may be in the form of cellulose alone, or may be in a mixed form containing a non-cellulose component, such as lignin or hemicellulose. A preferred cellulose substance is a cellulose substance containing a type I crystal cellulose structure, and examples thereof include substances each containing wood-derived pulp, wood, bamboo, linter pulp, cotton, or cellulose powder.

The method of producing cellulose fine fibers of the present invention has a feature in that the formic acid, the high-concentration formic acid aqueous solution, or the fibrillation solution containing the formic acid or the high-concentration formic acid aqueous solution is used as the fibrillation solution for fibrillating the cellulose.

Formic acid having a purity close to 100 wt% may be used as the formic acid or the high-concentration formic acid aqueous solution. In consideration of the ease of availability of a raw material and the ease of handling, it is realistic to use the high-concentration formic acid aqueous solution.

The high-concentration formic acid aqueous solution is, for example, a formic acid aqueous solution having a concentration of 40 wt% or more. It is preferred that a formic acid aqueous solution having a concentration of 50 wt% or more, more preferably a formic acid aqueous solution having a concentration of 70 wt% or more, still more preferably a formic acid aqueous solution having a concentration of 85 wt% or more be used because the impregnation of the solution into the cellulose and the fibrillation become more rapid as the formic acid concentration increases. When the formic acid concentration becomes less than 40 wt%, a side reaction between a modification reaction agent and water may occur.

In addition, the formic acid or the high-concentration formic acid aqueous solution may be used as a fibrillation

solution by being mixed with an aprotic solvent having a donor number of 26 or more. In this embodiment, a fibrillation solution excellent in modification reactivity can be obtained.

When the cellulose is impregnated with the fibrillation solution, the formic acid cleaves hydrogen bonds between microfibrils while the impregnated fibrillation solution swells the cellulose, and hence the microfibrils can disentangle by themselves to provide cellulose fine fibers.

The ratio of the formic acid in the fibrillation solution is preferably 20 wt% or more with respect to the entirety of the fibrillation solution. A case in which the ratio is less than 20 wt% is not preferred because the fibrillation may be insufficient owing to a reduction in impregnability of the fibrillation solution into the cellulose. Further, the formic acid can also function as a weakly acidic catalyst. Accordingly, the case in which the ratio is less than 20 wt% is not preferred because there is a risk in that the rate of the surface modification reaction of fine cellulose fibers is slow and hence their modification ratio reduces. When the high-concentration formic acid aqueous solution is used, the high-concentration formic acid aqueous solution is used so that the ratio of the formic acid in the fibrillation solution may fall within the range.

The ratio of the formic acid in the fibrillation solution is more preferably 30 wt% or more, still more preferably 50 wt% or more.

In addition, when the high-concentration formic acid aqueous solution and the aprotic solvent having a donor number of 26 or more are mixed, the ratio of the formic acid in the fibrillation solution is as described above. A formic acid aqueous solution having as high a concentration as possible (e.g., 40 wt% or more) is preferably used as the high-concentration formic acid aqueous solution to be used because a water concentration in the fibrillation solution is preferably set to 30 wt% or less.

Any appropriate solvent may be used as the aprotic solvent having a donor number of 26 or more to be mixed with the formic acid or the high-concentration formic acid aqueous solution. When described in detail, out of the aprotic solvents each having a donor number of 26 or more, a solvent having a donor number of from 26 to 35 is preferred, a solvent having a donor number of from 26.5 to 33 is more preferred, and a solvent having a donor number of from 27 to 32 is still more preferred. When the donor number is excessively low, an improving effect on the impregnability of the fibrillation solution containing the formic acid into a space between the microfibrils may not be expressed. The donor number is based on the description of the literature "Netsu Sokutei 28 (3), 135-143."

Examples of the aprotic solvent include a sulfoxide, a pyridine, a pyrrolidone, and an amide. Those solvents may be used alone or in combination thereof.

Further, of the aprotic solvents each having a donor number of 26 or more, at least one kind selected from the group consisting of dimethyl sulfoxide (donor number: 29.8), pyridine (donor number: 33.1), N,N-dimethylacetamide (donor number: 27.8), N,N-dimethylformamide (donor number: 26.6), and N-methyl-2-pyrrolidone (donor number: 27.3) is more preferred because the impregnability of the formic acid into a space between the microfibrils can be promoted to a high extent.

The aprotic solvent is not particularly limited as long as the solvent is the above-mentioned solvent that does not impair the impregnation and the fibrillation. Dimethyl sulfoxide, N,N-dimethylacetamide, N,N-dimethylformamide, or N-methyl-2-pyrrolidone is preferred because the impregnability of the formic acid into a space between the microfibrils can be promoted.

The fibrillation solution may contain any appropriate aprotic solvent having a donor number of less than 26, such as acetonitrile, dioxane, acetone, or tetrahydrofuran, as another solvent. When the content of the solvent having a donor number of less than 26 is excessively large, a reduction in impregnability of the fibrillation solution into a space between the cellulose microfibrils and a reduction in fibrillating effect on the cellulose may occur. Accordingly, the content of the solvent having a donor number of less than 26 is preferably 30 wt% or less, more preferably 25 wt% or less.

The formic acid, the high-concentration formic acid aqueous solution, or the fibrillation solution containing the formic acid or the high-concentration formic acid aqueous solution to be used in the present invention may further contain a cellulose modification reaction agent. When the modification reaction agent is added, the fibrillation solution can be impregnated as a modification-reactive fibrillation solution into the cellulose to chemically modify the surfaces of the cellulose microfibrils while fibrillating the cellulose.

The ratio of the formic acid in the modification-reactive fibrillation solution may be the same as the concentration of the formic acid in the fibrillation solution. The concentration of the formic acid is preferably 30 wt% or more, more preferably 50 wt% or more. In addition, from the viewpoint of effective utilization of the modification reaction agent, a formic acid aqueous solution having as high a concentration as possible, or specifically a concentration of 40 wt% or more is preferably used as the high-concentration formic acid aqueous solution to be added to the modification-reactive fibrillation solution. The concentration of the formic acid is more preferably 60 wt% or more, still more preferably 80 wt% or more.

Inaddition, theratioof the modification reaction agent in the modification-reactive fibrillation solution is not particularly limited as long as the impregnability of the fibrillation solution into the cellulose is not reduced. The ratio of the modification reaction agent is, for example, 30 parts by weight or less, preferably from 0.1 part by weight to 30 parts by weight, more preferably from 0.1 part by weight to 25 parts by weight, still more preferably from 0.5 part by weight to 20

parts by weight with respect to 100 parts by weight of the modification-reactive fibrillation solution. When the ratio of the modification reaction agent is excessively large, the fibrillation degree of the cellulose may reduce owing to a reduction in impregnability of the fibrillation solution.

The modification-reactive fibrillation solution only needs to contain the above-mentioned ratios of the formic acid and the modification reaction agent. However, it is not easy to use 100% formic acid, and hence the solution typically contains water or water and the aprotic solvent having a donor number of 26 or more in addition to the foregoing. The ratio of the water or the water and the aprotic solvent having a donor number of 26 or more in the modification-reactive fibrillation solution only needs to be such that the formic acid and the modification reaction agent satisfy the above-mentioned contents, and the ratio may be freely selected in accordance with the purposes of the fibrillation and the modification.

When the modification reaction agent is added to the fibrillation solution, the cellulose may be impregnated with the modification-reactive fibrillation solution prepared by mixing the fibrillation solution with the modification reaction agent, or the following may be adopted: the cellulose is impregnated with the fibrillation solution to which the modification reaction agent is not added, and after the fibrillation has advanced to some extent, the modification reaction agent is added to the solution, and the solution is impregnated as the modification-reactive fibrillation solution into the cellulose.

Any appropriate compound may be used as the cellulose modification reaction agent. The modification reaction agent is preferably at least one kind selected from a carboxylic acid halide, a carboxylic acid anhydride, a carboxylic acid, an isocyanate, and an epoxy.

The cellulose modification reaction agents may be used alone or in combination thereof. Of those modification reaction agents, in terms of the fibrillation property of the cellulose and the reactivity of the solution, a modification reaction agent having 2 to 7 carbon atoms is preferred, and a modification reaction agent having 2 to 5 carbon atoms is more preferably used. Meanwhile, when the number of carbon atoms of the modification reaction agent becomes 8 or more, the impregnability of the solution into a space between the microfibrils and the reactivity thereof with a hydroxy group of the cellulose may reduce. Accordingly, the modification reaction agent is preferably added during the fibrillation or after the completion of the fibrillation. Further, a modification reaction agent having a large number of carbon atoms is preferably used in combination with a modification reaction agent having a small number of carbon atoms.

The carboxylic acid halide serving as the modification reaction agent may be at least one kind selected from the group consisting of carboxylic acid halides each represented by the following formula (1):

$$R^1\text{-}C(=O)\text{-}X \qquad (1)$$

where $R^1$ represents any one of an alkyl group having 1 to 24 carbon atoms, an alkylene group, a cycloalkyl group, and an aryl group, and X represents Cl, Br, or I.

As the carboxylic acid halide, any appropriate carboxylic acid halide may be used. Examples thereof include a carboxylic acid chloride, a carboxylic acid bromide, and a carboxylic acid iodide . Specific examples of the carboxylic acid halide include, but not limited to, acetyl chloride, acetyl bromide, acetyl iodide, propionyl chloride, propionyl bromide, propionyl iodide, butyryl chloride, butyryl bromide, butyryl iodide, benzoyl chloride, benzoyl bromide, and benzoyl iodide. Of those, a carboxylic acid chloride may be suitably adopted in terms of reactivity and handleability.

Any appropriate carboxylic acid anhydride may be used as the carboxylic acid anhydride serving as the modification reaction agent. Examples of the carboxylic acid anhydride include: monobasic carboxylic acid anhydrides [such as: an anhydride of a saturated aliphatic monocarboxylic acid, such as acetic acid, propionic acid, (iso) butyric acid, or valeric acid; an anhydride of an unsaturated aliphatic monocarboxylic acid, such as (meth) acrylic acid or oleic acid; an anhydride of an alicyclic monocarboxylic acid, such as cyclohexanecarboxylic acid or tetrahydrobenzoic acid; and an anhydride of an aromatic monocarboxylic acid, such as benzoic acid or 4-methylbenzoic acid] ; dibasic carboxylic acid anhydrides [such as: a saturated aliphatic dicarboxylic acid anhydride, such as succinic anhydride or adipic anhydride; an unsaturated aliphatic dicarboxylic acid anhydride, such as maleic anhydride or itaconic anhydride; an alicyclic dicarboxylic acid anhydride, such as 1-cyclohexene-1,2-dicarboxylic anhydride, hexahydrophthalic anhydride, or methyltetrahydrophthalic anhydride; and an aromatic dicarboxylic acid anhydride, such as phthalic anhydride or naphthalic anhydride]; and polybasic carboxylic acid anhydrides (such as a polycarboxylic acid (anhydride), such as trimellitic anhydride or pyromellitic anhydride) . Acetic anhydride, propionic anhydride, or butyric anhydride is preferred because the fibrillation can be satisfactorily performed.

Any appropriate compound may be used as the isocyanate . The isocyanate is, for example, an isocyanate represented by the following formula (2) or (3):

$$R^2\text{-}N{=}C{=}O \qquad (2)$$

$$O{=}C{=}N\text{-}R^3\text{-}N{=}C{=}O \qquad (3)$$

where $R^2$ or $R^3$ represents an alkyl group having 1 to 24 carbon atoms, an alkylene group, a cycloalkyl group, or an aryl group.

Specific examples of the isocyanate include isocyanates, such as methyl isocyanate (MIC), diphenylmethane diisocyanate (MDI), hexamethylene diisocyanate (HDI), toluene diisocyanate (TDI), isophorone diisocyanate (IPDI), 2-isocyanatoethyl methacrylate (MOI), and 2-isocyanatoethyl acrylate (AOI). MOI and AOI are preferred in terms of compositing with an acrylic resin. In addition, MIC, MDI, HDI, TDI, or IPDI is preferred in terms of compositing with a urethane resin.

Any appropriate compound may be used as the epoxy. The epoxy may be, for example, at least one kind selected from the group consisting of epoxies each represented by the following formula (4) or (5) :

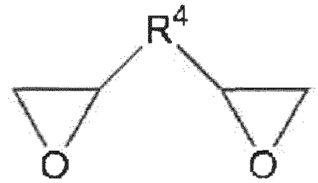

(4)

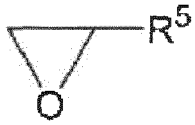

(5)

where $R^4$ or $R^5$ represents an alkyl group having 1 to 24 carbon atoms, an alkylene group, a substituent derived from ethylene glycol, a substituent derived from bisphenol A, a substituent derived from bisphenol F, a cycloalkyl group, or an aryl group.

Specific examples of the epoxy include: amonofunctional epoxy modification reaction agent, such as allyl glycidyl ether, 2-ethylhexyl glycidyl ether, glycidyl phenyl ether, 4-tert-butylphenyl glycidyl ether, or lauryl alcohol (EO) 15 glycidyl ether; and a bifunctional epoxy modification reaction agent, such as bisphenol A epoxy, bisphenol F epoxy, diglycidyl terephthalate, or diglycidyl o-phthalate. A bifunctional epoxy modification reaction agent is preferred in terms of compositing with an epoxy resin.

Any appropriate compound may be used as the carboxylic acid. The carboxylic acid is, for example, an aliphatic carboxylic acid or a carboxylic acid having an aryl group. The carboxylic acid is specifically, for example, a carboxylic acid represented by the following formula (6):

$$R^6\text{-COOH} \qquad (6)$$

where $R^6$ represents an alkyl group having 1 to 24 carbon atoms, an alkylene group, a cycloalkyl group, or an aryl group.

An acid catalyst maybe further added to the fibrillation solution or the modification-reactive fibrillation solution. Any appropriate compound may be used as the acid catalyst. The catalyst is, for example, sulfuric acid, p-toluenesulfonic acid, hydrochloric acid, phosphoric acid, or nitric acid. The amount of the acid catalyst to be added to the fibrillation solution may be set to any appropriate amount. The addition amount of the acid catalyst is preferably from 0.01 wt% to 15 wt%, more preferably from 0.05 wt% to 10 wt% with respect to the fibrillation solution.

The weight ratio of the cellulose to the fibrillation solution or the modification-reactive fibrillation solution "former/latter" is, for example, from 0.5/99.5 to 25/75, preferably from 1.0/99.0 to 20/80, more preferably from 2.0/98 to 15/85.

Next, the reason why the cellulose is fibrillated with the fibrillation solution to be used in the present invention may be assumed to be as described below. That is, the formic acid has a large solubility parameter (SP value, 13.5), a large donor number (donor number: 19), a large acceptor number (acceptor number: 83.6), and a large dielectric constant (58.5). Accordingly, the formic acid may cleave hydrogen bonds between cellulose fibers, between lamellae, and between the microfibrils, while being impregnated into the cellulose, to cause the fibrillation. The acceptor number is a value obtained by the Gutmann method.

Further, the formic acid contains an aldehyde functional group. Accordingly, it is assumed that the aldehyde group forms a hemiacetal or an acetal with a hydroxy group on the surfaces of the microfibrils to cleave a hydrogen bond between the microfibrils, and hence the microfibrils are easily separated so that the cellulose may be fibrillated.

In addition, the fibrillation solution to be used in the present invention is not impregnated into the crystalline zones (domains) of the microfibrils, and hence the resultant cellulose fine fibers are less vulnerable to damage and have structures close to those of natural microfibrils. At the same time, in the process, the cellulose can be fibrillated without

the use of mechanical fibrillation means based on the action of a shear force, and hence damage by physical action is reduced. Accordingly, each of the resultant modified cellulose fine fibers can be assumed to hold high strength. Further, the modified cellulose fine fibers each have low surface roughness, and hence can be easily redispersed in a solvent or a resin even when dried once.

Methods of producing cellulose fine fibers and surface-modified cellulose fine fibers of the present invention are each performed by impregnating the cellulose with the fibrillation solution containing the formic acid to cleave the hydrogen bonds between the cellulose fibers, between the lamellae, and between the microfibrils. In order to impregnate the cellulose with the fibrillation solution containing the formic acid, the fibrillation solution and the cellulose only need to be mixed, and a method involving adding the cellulose to the fibrillation solution to mix the solution and the cellulose or adding the fibrillation solution to the cellulose to mix the solution and the cellulose may be typically utilized.

In addition, the cellulose is preferably brought into a state of being torn into a certain size before its mixing with the fibrillation solution. The certain size is a size smaller than a size to be loaded into a fibrillation container.

Also in the case of the fibrillation and the modification with the modification-reactive fibrillation solution obtained by causing the modification reaction agent to coexist in the fibrillation solution, the same method as that in the case of the fibrillation solution free of the modification reaction agent is used. That is, when the modification-reactive fibrillation solution and the cellulose are mixed, the modification-reactive fibrillation solution is impregnated into a space between the microfibrils to cleave a hydrogen bond between the microfibrils, and hence the cellulose fine fibers obtained by modifying the surfaces of the fine fibers can be obtained.

The modification-reactive fibrillation solution simultaneously performs the modification and the fibrillation by: uniformly mixing the fibrillation solution and the modification reaction agent through stirring or the like; and impregnating the cellulose with the mixture. The order in which the fibrillation solution and the modification reaction agent are mixed is not particularly limited, and the fibrillation solution and the modification reaction agent may be mixed in any appropriate order. A method involving adding the modification reaction agent to the formic acid, the formic acid aqueous solution, or the aprotic solvent containing the formic acid or the formic acid aqueous solution is typically used.

In addition, when the polarity of the modification reaction agent is low, in order that the impregnation rate of the fibrillation solution, and the swelling rate and fibrillation rate of the cellulose may not be reduced, the following is preferably adopted: first, the cellulose is impregnated with the fibrillation solution to which the modification reaction agent is not added, and after the fibrillation has advanced to some extent, the modification reaction agent is added to the fibrillation solution. In this case, the entirety of the modification reaction agent may be added to the fibrillation solution in one stroke, or the modification reaction agent may be added in several portions.

Further, a catalyst may be added after the cellulose has been impregnated with the modification-reactive fibrillation solution.

A fibrillation method is described in detail. In a fibrillation method based on the fibrillation solution to be used in the present invention, after the fibrillation solution or the modification-reactive fibrillation solution has been mixed with the cellulose, the mixture may be left to stand for from 0.5 hour to 1 hour or more, or after the mixing, stirring may be further performed to such an extent that the cellulose can maintain a uniform state in the solution. That is, although the fibrillation is advanced merely by mixing the fibrillation solution with the cellulose and leaving the mixture to stand, stirring may be performed with stirring means for promoting the impregnation of the solution or uniformity of the mixture. The stirring may be performed with any appropriate means, and in ordinary cases, the stirring only needs to be stirring comparable in intensity to stirring with a stirring machine or a magnetic stirrer generally used in organic synthesis. The stirring machine is not particularly limited, and in ordinary cases, the machine only needs to be an apparatus capable of stirring, blending, or kneading. A kneading machine, such as a kneader or an extruder, is also permitted. In particular, when the concentration of the cellulose is high, a kneader or an extruder that can deal with a high viscosity is preferred. In addition, the stirring may be performed continuously or may be performed intermittently.

With regard to a temperature in the fibrillation in the present invention, there is no need to heat the mixture of the solution and the cellulose, and the fibrillation or the modification reaction may be performed at room temperature. When the mixture of the solution and the cellulose is stirred for 2 hours or more, the cellulose can be chemically fibrillated as described above without the use of mechanical fibrillation means based on the action of a shear force. In the present invention, the cellulose can be fibrillated without the use of excess energy. Heating may be performed in the fibrillation treatment because when the fibrillation temperature is made higher than normal temperature, a treatment time required for the fibrillation can be shortened. In consideration of energy efficiency, a satisfactory result is obtained even when no heating is performed. The present invention has a feature in that the cellulose can be fibrillated at normal temperature without the use of excess energy.

Meanwhile, at the time of the preparation of the surface-modified cellulose fine fibers with the modification-reactive fibrillation solution, heating is preferably performed for promoting the modification reaction. When the solution and the cellulose are caused to react with each other at normal pressure, a heating temperature is, for example, 90°C or less, preferably from 40°C to 90°C, more preferably 80°C or less, still more preferably 70°C or less, particularly preferably 50°C or less. When the solution and the cellulose are caused to react with each other while being pressurized,

the heating temperature is preferably 180°C or less, more preferably 150°C or less, still more preferably 135°C or less. A case in which the solution and the cellulose are heated to a temperature of more than 180°C is not preferred because the cellulose may decompose. The case in which the solution and the cellulose are heated to a temperature of more than 180°C is not preferred also because of the following reason: at any such temperature, the modification reaction rate of the cellulose fine fibers exceeds the fibrillation rate of the cellulose in some cases, and in such cases, the fibrillation degree of the cellulose may deteriorate, or the yield of the surface-modified cellulose fine fibers may reduce.

The fibrillation treatment time required for the fibrillation of the cellulose in the present invention varies depending on, for example, the concentration of the formic acid, when an aprotic polar solvent is used, the donor number of the solvent to be added, a mixing ratio between the fibrillation solution and the cellulose, a treatment temperature in the fibrillation, and the degree of the stirring of the solution and the cellulose. When the fibrillation is performed in the above-mentioned condition ranges, the fibrillation can be typically performed in a time period in the range of from 0.5 hour to 50 hours.

When the treatment time is excessively short, the impregnation of the fibrillation solution into a space between the microfibrils becomes insufficient, and hence the fibrillation becomes insufficient in some cases. In addition, when the treatment time is excessively long, the efficiency of the treatment deteriorates to reduce the yield in some cases. The treatment time is preferably from about 1 hour to about 36 hours, more preferably from about 1.5 hours to about 24 hours.

A treatment time in the case of the fibrillation and modification of the cellulose with the modification-reactive fibrillation solution also varies depending on, for example, the concentration of the formic acid, when an aprotic polar solvent is used, the donor number of the solvent to be added, the kind of the modification reaction agent, the donor number of the solvent to be added, a mixing ratio between the modification-reactive fibrillation solution and the cellulose, a treatment temperature in the fibrillation and the modification, and the degree of the stirring of the solution and the cellulose. When the fibrillation is performed in the above-mentioned condition ranges, the fibrillation and the modification can be typically performed in a time period in the range of from 0.5 hour to 50 hours.

The treatment time can be shortened by increasing the treatment temperature (reaction temperature) or increasing the rate of the stirring. However, when the reaction time is excessively short, there is a risk in that the impregnation of the fibrillation solution into a space between the microfibrils becomes insufficient, and hence the fibrillation and the modification reaction become insufficient.

Further, when the modification reaction agent is added in the middle of the reaction, the reaction is preferably further advanced for from 0.5 hour to 5 hours or more after the addition of the modification reaction agent.

In addition, when the fibrillation is performed by using a carboxylic acid anhydride having a large number of carbon atoms or a carboxylic acid halide having a large number of carbon atoms as the modification reaction agent, the fibrillation treatment time is preferably 2 hours or more, more preferably 3 hours or more, still more preferably 4 hours or more.

In the case of the fibrillation with the fibrillation solution, the cellulose may be treated in any one of an open container and a closed container. When the cellulose is fibrillated and modified with the modification-reactive fibrillation solution, the fibrillation and the modification are preferably performed in the closed container in order that the volatilization of the modification reaction agent or a side reaction of the modification reaction agent due to its water absorption may be suppressed. Further, when the modification reaction agent is liable to undergo a side reaction with moisture, the fibrillation is preferably performed under a nitrogen or argon atmosphere. The treatment may be performed while the open container or the closed container is mounted with a stirring apparatus and a heating reflux apparatus.

The cellulose fine fibers obtained by the fibrillation may be separated and purified by any appropriate method (e.g., centrifugation, filtration, concentration, or precipitation). The cellulose fine fibers and the fibrillation solution may be separated from each other by, for example, centrifuging or filtering a fibrillation mixture containing the fine fibers and the fibrillation solution. Alternatively, the following may be performed: a solvent that can dissolve the components of the fibrillation solution (e.g., water, an alcohol, or a ketone) is added to the fibrillation mixture, and the whole is separated and purified (washed) by the separation method (any appropriate method), such as the centrifugation, the filtration, or the precipitation. A separation operation may be performed a plurality of times (e.g., about twice to about five times). When the modification reaction agent is added, the modification reaction agent maybe deactivated with water, methanol, or the like after the completion of the reaction, but is preferably recovered by distillation and reused without being deactivated from the viewpoint of reuse.

The resultant cellulose fine fibers include cellulose fibrillated to sizes of from nanometers to several hundred nanometers, and their average fiber diameter is, for example, from 2 nm to 800 nm, preferably from 3 nm to 600 nm, more preferably from 5 nm to 500 nm, still more preferably from 10 nm to 300 nm. When the average fiber diameter is excessively large, an effect of the fine fibers as a reinforcing material may reduce. When the average fiber diameter is excessively small, the handleability and heat resistance of each of the fine fibers may reduce.

A strong mechanical force is not applied to the resultant cellulose fine fibers, and hence the fine fibers have fiber lengths longer than those of fine fibers obtained by a conventional mechanical fibrillation method, and their average

fiber length is, for example, 1 μm or more. In addition, although the average fiber length of the cellulose fine fibers to be obtained falls within the range of from about 1 μm to about 200 μm, cellulose fine fibers having an appropriate average fiber length may be obtained by controlling reaction conditions in accordance with their applications. In general, the average fiber length is, for example, from 1 μm to 100 μm, preferably from 2 μm to 60 μm, more preferably from 3 μm to 50 μm. When the average fiber length is excessively short, the reinforcing effect and film-forming function of the fine fibers mayreduce. In addition, when the average fiber length is excessively long, there is a risk in that the fine fibers are liable to be entangled with each other, and hence their dispersibility in a solvent or a resin reduces.

The aspect ratio of the fine fibers may be easily controlled by the composition and impregnation time of the fibrillation solution. In general, the aspect ratio is preferably from 40 to 1,000. From the viewpoints of the dispersibility and the reinforcing effect, the aspect ratio is more preferably from about 50 to about 800, still more preferably from about 80 to about 600. A case in which the aspect ratio is less than 40 is not preferred because the reinforcing effect and the strength of a free-standing film formed of the fine fibers are low, though the fine fibers can be easily dispersed. Meanwhile, when the aspect ratio is more than 1,000, the dispersibility may reduce owing to the entanglement of the fine fibers.

The cellulose fine fibers and the modified cellulose microfibrils obtained in the present invention, the cellulose fine fibers and the modified cellulose fine fibers each having an average fiber diameter of from 2 nm to 800 nm and an aspect ratio of from 40 to 1,000, can be redispersed as described below. The cellulose fine fibers that are not subjected to any modification treatment can be redispersed in water, an organic solvent, such as cellosolve containing ethylene glycol, and a monomer and a resin each having a SP value of more than 10 after their drying. The cellulose fine fibers modified with the modification reaction agent can be redispersed in an organic solvent, a monomer, or a resin having a SP value of 10 or less after their drying. Of the modified cellulose fine fibers, acetylated-modified cellulose fine fibers can be redispersed in organic solvents, such as cellosolve containing ethylene glycol, ethanol, acetone, 1,4-dioxane, and dimethylacetamide, an organic solvent having a SP value of more than 10, and an organic solvent, a monomer, and a resin each having a SP value of 10 or less. Cellulose fine fibers modified with a carboxylic acid anhydride whose alkyl group has 3 or more carbon atoms can be dispersed in a solvent, a monomer, or a resin having a SP value of more than 10.

Examples of the solvent having a SP value of 10 or less in which the fine fibers can be dispersed include acetone (9.9), 1,4-dioxane (10), 1-dodecanol (9.8), tetrahydrofuran (9.4), methyl ethyl ketone (MEK) (9.3), ethyl acetate (9.1), toluene (8.8), butyl acetate (8.7), and methyl isobutyl ketone (MIBK) (8.6). Examples of the resin having a SP value of 10 or less include polyurethane (10.0), an epoxy resin (9 to 10), polyvinyl chloride (9.5 to 9.7), polycarbonate (9.7), polyvinyl acetate (9.4), a polymethyl methacrylate resin (9.2), polystyrene (8.6 to 9.7), NBR rubber (8.8 to 9.5), polypropylene (8.0), and polyethylene (7.9).

The surfaces of the modified fine fibers obtained by the present invention are uniformly modified, and hence the fine fibers can be satisfactorily dispersed in an organic solvent, a monomer, or a resin. In particular, the dispersion of the fine fibers in a solvent or a resin having a SP value of 10 or less that cannot be achieved by the related art can be performed. A possible reason for the foregoing is as follows: the fine fibers obtained in the present invention are modified in elongated states in the fibrillation solution, and hence hydroxy groups on their surfaces are modified without unevenness; accordingly, the fine fibers can maintain the elongated states even after drying. Meanwhile, in the related art, in order that surface-modified cellulose fine fibers may be prepared, first, cellulose is fibrillated by strong mechanical pulverization or a strong shear force in water, and then a modification reaction is performed by replacing the water with an aprotic polar solvent, such as acetone or toluene. At the time of the solvent replacement, unmodified cellulose fine fibers are bonded to each other, gather, or are entangled with each other by themselves, and hence an aggregated state in which the fine fibers form a mass is established. Even when the fine fibers are loaded in the state into a reaction solvent, the fine fibers are present as an aggregate, and hence only a hydroxy group on the surface of the aggregate is modified. Accordingly, modified fine fibers to be obtained cannot be satisfactorily dispersed in a solvent or a resin.

The cellulose fine fibers obtained in the present invention can be assumed to find applications in the fields of, for example, a paint, an adhesive, and a composited material. In addition, in the case of dispersion in a resin, the modified cellulose fine fibers obtained in the present invention, the fine fibers having a dispersion effect higher than that of related-art modified cellulose fine fibers, exhibit a stronger reinforcing effect when dispersed in the resin.

The ratio (aspect ratio) of the average fiber length of the cellulose fine fibers to the average fiber diameter thereof may be changed in accordance with their applications. For example, when the fine fibers are composited with a resin, the aspect ratio may be 30 or more, and is preferably from 40 to 1,000, more preferably from 50 to 500, still more preferably from 60 to 200, particularly preferably from 80 to 150.

With regard to a method of determining the average fiber diameter, average fiber length, and aspect ratio of the modified cellulose fine fibers, in the present invention, these values are each determined by a method involving randomly selecting 50 fibers from an image of a scanning electron microscope photograph, and adding and averaging measured values to calculate a target value.

In addition, modified cellulose fine fibers obtained by treatment with a fibrillation solution containing a modification reaction agent can be satisfactorily dispersed in an organic medium, such as an organic solvent or a resin, because

each fiber or all fibers are modified without unevenness.

In order to cause the resin to effectively express the characteristics of modified cellulose fine fibers (e.g. , low linear expansion characteristics, strength, and heat resistance), modified cellulose fine fibers each having high crystallinity are preferred.

The modified cellulose fine fibers obtained in the present invention can maintain the crystallinity of the raw material cellulose to a high extent because the cellulose is chemically fibrillated. The crystallinity degree of the modified cellulose fine fibers is preferably as high as possible because the physical properties of the modified cellulose fine fibers are improved. The crystallinity degree of the modified cellulose fine fibers is, for example, 50% or more, preferably 55% or more, more preferably 60% or more, still more preferably 65% or more. When the crystallinity degree is excessively small, the characteristics of the fine fibers, such as linear expansion characteristics and strength, maybe reduced. The crystallinity degree of the modified cellulose fine fibers obtained in the present invention is affected by the crystallinity degree of the cellulose serving as a raw material, and hence the crystallinity degree of the modified cellulose fine fibers may be equal to or less than the crystallinity degree of the cellulose serving as a raw material. Therefore, the raw material cellulose only needs to be selected in accordance with the use purposes of the modified cellulose fine fibers. The crystallinity degree may be measured by a method described in Examples to be described later.

The average degree of substitution of the modified cellulose fine fibers (the average number of substituted hydroxy groups per glucose serving as a basic constituent unit for the cellulose) may be determined by the diameters of the fine fibers and the kind of the modification reaction agent. The average sensitivity is, for example, 1.5 or less, preferably from 0.02 to 1.2, more preferably from 0.05 to 1.2, still more preferably from 0.1 to 1.2, still more preferably from 0.15 to 1.0, particularly preferably from 0.25 to 0.9, more particularly preferably from 0.3 to 0.9. When the average degree of substitution is excessively large, the crystallinity degree of the fine fibers or the yield thereof may reduce. The average degree of substitution (DS) is the average number of substituted hydroxy groups per glucose serving as a basic constituent unit for the cellulose, and is described in, for example, Biomacromolecules 2007, 8, 1973-1978, WO 2012/124652 A1, or WO 2014/142166 A1, the descriptions of which are incorporated herein by reference.

Examples

The present invention is described in more detail below on the basis of Examples. However, the present invention is not limited to these Examples. Details about used raw materials are as described below, and the characteristics of the resultant modified cellulose fine fibers were measured as described below. In Example or Comparative Example in which the temperature at which fibrillation was performed is not specified, the fibrillation is performed at room temperature.

(Used Raw Materials, Catalysts, and Solvents)

Cellulose pulp: Pulp obtained by tearing commercial wood pulp (manufactured by Georgia-Pacific LLC, product name: FLUFF PULP ARC48000GP) into sizes that can be loaded into a sample bottle.

Formic acid, organic solvents, and carboxylic acid anhydrides: Products manufactured by Nacalai Tesque, Inc. An 88 wt% formic acid aqueous solution was used as formic acid.

(Evaluation of Fibrillation Degree)

The fibrillation degree of cellulose in the resultant cellulose fine fibers was observed with an optical microscope ("OPTIPHOT-POL" manufactured by Nikon Corporation), and was evaluated by the following criteria.

◎: Fibrillation advances, and hence substantially no fibers each having a fiber diameter of more than 500 nm are present.

o: Most fiber diameters are 500 nm or less, but fibers each having a fiber diameter of 1 μm or more are slightly present.

×: The fibers of the raw material cellulose remain as they are.

(Average Degree of Substitution of Cellulose Fine Fibers)

The surface modification ratio of modified cellulose fine fibers was represented by an average degree of substitution, and was measured by the following titration method. The average degree of substitution is the average of the number of modified hydroxy groups (number of substituents) per repeating unit of cellulose.

That is, 6 ml of methanol and 2 ml of distilled water were added to surface-modified cellulose fine fibers (solid content: 0.05 g) that had been washed with water or an organic solvent, and dried, and the mixture was stirred at from 60°C to 70°C for 30 minutes. After that, 10 ml of a 0.05 N sodium hydroxide aqueous solution was added to the mixture, and the whole was stirred at from 60°C to 70°C for 15 minutes, and was further stirred at room temperature for 1 day.

The resultant mixed liquid was titrated with a 0.02 N hydrochloric acid aqueous solution through the use of phenolphthalein, and the chemical modification ratio of the fine fibers was calculated from the following equation.

Here, the number of moles Q of a substituent introduced by the chemical modification is determined from the amount Z (ml) of the 0.02 N hydrochloric acid aqueous solution required for the titration by using the following equation.

$$Q\ (mol) = 0.05\ (N) \times 10\ (ml)/1,000 - 0.02\ (N) \times Z\ (ml)/1,000$$

A relationship between the number of moles Q of the substituent and the average degree of substitution D of the fine fibers is calculated from the following equation [cellulose= $(C_6O_5H_{10})$ n= (162 .14) n, number of hydroxy groups per repeating unit=3, molecular weight of OH=17]:

$$D = 162.14 \times Q/[\text{sample amount} - (T-18) \times Q]$$

where T represents the molecular weight of a carboxylic acid serving as a precursor of an esterification substituent. In the case of, for example, acetylation modification, T represents the molecular weight of acetic acid.

(Shape Observation of Cellulose Fine Fibers)

The shapes of cellulose fine fibers were observed with a FE-SEM ("JSM-6700F" manufactured by JEOL Ltd., measurement conditions: 20 mA and 60 seconds) . The average fiber diameter and average fiber length of the fine fibers were each calculated by randomly selecting 50 fibers from an image of a SEM photograph, and adding and averaging measured values.

(Crystallinity Degree)

The crystallinity degree of the resultant modified cellulose fine fibers was measured by an XRD analysis method (Segal method) on the basis of a method described in the reference: Textile Res. J. 29: 786-794 (1959), and was calculated from the following equation:

$$\text{Crystallinity degree}\ (\%) = [(I200 - IAM)/I200] \times 100\%$$

where I200 represents the diffraction intensity of a lattice plane (002 plane) (diffraction angle $2\theta$=22.6°) in X-ray diffraction, and IAM represents the diffraction intensity of an amorphous portion (the lowest portion between the 002 plane and a 110 plane, diffraction angle $2\theta$=18.5°).

[Example 1]

10 g of the formic acid aqueous solution and 0.3 g of the cellulose pulp were loaded into a 20-milliliter sample bottle, and the mixture was stirred with a magnetic stirrer for 3 hours. After that, the mixture was transferred to a 200-milliliter centrifuge tube, and 100 ml of distilled water was added to the mixture, followed by washing through centrifugation. Formic acid was removed by performing centrifugation three times according to the same procedure. Thus, cellulose fine fibers were obtained. The modification ratio of the resultant cellulose fine fibers was determined by solid-state NMR. Inaddition, the fibrillation degree of the cellulose pulp was observed with an optical microscope. The shapes of the fine fibers were observed with a FE-SEM. The results are shown in Table 1. As shown in Table 1, it was found that the surfaces of the cellulose fine fibers were not modified. A SEM photograph of the fine fibers is shown in FIG. **1.** The cellulose fine fibers had an average fiber diameter of 100 nm or less, and an average fiber length of 13.9 μm. The resultant fine fibers were able to be redispersed in water or ethylene glycol after their drying at 105°C. The result of the measurement of the crystallinity degree of the fine fibers is shown in Table 1.

[Example 2]

Cellulose fine fibers were obtained in the same manner as in Example 1 except that: 9 g of the formic acid aqueous solution and 1 g of propionic anhydride were used instead of 10 g of the formic acid aqueous solution; and the

fibrillation time was changed from 3 hours to 5 hours. The resultant cellulose fine fibers were evaluated in the same manner as in Example 1. The cellulose fine fibers had an average degree of ester substitution of 0.5, an average fiber diameter of 100 nm or less, which was substantially equal to that of Example 1, and an average fiber length of 15.0 μm. The resultant fine fibers were able to be redispersed in dimethylacetamide, acetone, or methyl ethyl ketone after their drying with a fan dryer at 105°C. A SEM image of the fine fibers is shown in FIG. **2.** The result of the measurement of the crystallinity degree of the fine fibers is shown in Table 1.

[Example 3]

Cellulose fine fibers were obtained in the same manner as in Example 2 except that acetic anhydride was used instead of propionic anhydride. The resultant cellulose fine fibers were evaluated in the same manner as in Example 2. The cellulose fine fibers had an average degree of ester substitution of 0 . 6, an average fiber diameter of 100nm or less, and an average fiber length of 12. 2 μm. The resultant fine fibers were able to be redispersed in dimethylacetamide after their drying with a fan dryer at 105°C. A SEM image of the fine fibers is shown in FIG. **3.** The result of the measurement of the crystallinity degree of the fine fibers is shown in Table 1.

[Example 4]

Cellulose fine fibers were obtained in the same manner as in Example 2 except that butyric anhydride was used instead of propionic anhydride. The resultant cellulose fine fibers were evaluated in the same manner as in Example 2. The fine fibers had an average degree of ester substitution of 0.32, an average fiber diameter of 100 nm or less, and an average fiber length of 12.6 μm. Theresultant fine fibers were able to be redispersed in dimethylacetamide, acetone, or methyl ethyl ketone after their drying with a fan dryer at 105°C. A SEM image of the fine fibers is shown in FIG. **4.** The result of the measurement of the crystallinity degree of the fine fibers is shown in Table 1.

[Example 5]

Cellulose fine fibers were obtained in the same manner as in Example 1 except that 5 g of the formic acid aqueous solution and 5 g of DMSO were used instead of 10 g of the formic acid aqueous solution. The resultant cellulose fine fibers were evaluated in the same manner as in Example 1. The surfaces of the resultant cellulose fine fibers were not modified, and the fine fibers had an average fiber diameter of 100 nm or less, and an average fiber length of 13.3 μm. A SEM image of the fine fibers is shown in FIG. **5.** The result of the measurement of the crystallinity degree of the fine fibers is shown in Table 1.

[Example 6]

Cellulose fine fibers were obtained in the same manner as in Example 1 except that instead of the fibrillation treatment at room temperature, the fibrillation solution was stirred for 2 hours while being heated at 60°C. The resultant cellulose fine fibers were evaluated in the same manner as in Example 1. The average fiber diameter and average fiber length of the fine fibers were substantially equal to those of Example 1.

(Comparative Example 1)

Fibrillation was performed in the same manner as in Example 1 except that the formic acid aqueous solution was changed to acetic acid. The cellulose pulp substantially remained in the state of a sheet, and was not dispersed.

(Comparative Example 2)

Fibrillation was performed in the same manner as in Example 1 except that the formic acid aqueous solution was changed to propionic acid. The cellulose pulp substantially remained in the state of a sheet, and was not dispersed.

(Comparative Example 3)

Fibrillation was performed in the same manner as in Example 1 except that the formic acid aqueous solution was changed to a 35 wt% hydrochloric acid aqueous solution. The cellulose pulp was able to be dispersed to a fiber level, but as a result of observation with an optical microscope, its fibers were not fibrillated at all.
The results of the evaluations of the modified cellulose fine fibers obtained in Examples and Comparative Examples are shown in Table 1.

Table 1

| | Composition (weight ratio) | Fibrillation temperature/ time | Fibrillation degree | Average degree of ester substitution (DS) | Crystallinity degree (%) |
|---|---|---|---|---|---|
| Example 1 | Formic acid aqueous solution/ pulp (10/0.3) | Room temperature/ 3 hr | ◎ | 0 | 86 |
| Example 2 | Formic acid aqueous solution/ propionic anhydride/pulp (9/1/0.3) | Room temperature/ 5 hr | ◎ | 0.38 | 83 |
| Example 3 | Formic acid aqueous solution/ acetic anhydride/pulp (9/1/0.3) | Room temperature/ 5 hr | ◎ | 0.50 | 85 |
| Example 4 | Formic acid aqueous solution/ butyric anhydride/pulp (9/1/0.3) | Room temperature/ 5 hr | ◎ | 0.31 | 84 |
| Example 5 | Formic acid aqueous solution/ DMSO/pulp (5/5/0.3) | Room temperature/ 3 hr | ◎ | 0 | 86 |
| Example 6 | Formic acid aqueous solution/ pulp (10/0.3) | 60°C/3 hr | ◎ | 0 | 82 |
| Comparative Example 1 | Acetic acid/pulp (10/0.3) | Room temperature/ 3 hr | × | - | - |
| Comparative Example 2 | Propionic acid/pulp (10/0.3) | Room temperature/ 3 hr | × | - | - |
| Comparative Example 3 | 35 wt% Hydrochloric acid aqueous solution/pulp (10/0.3) | Room temperature/ 3 hr | × | - | - |

As is apparent from the results of Table 1, while the fibrillation advanced in each of the cellulose fine fibers obtained in Examples, the fibrillation hardly advanced in each of the modified cellulose fine fibers obtained in Comparative Examples.

Industrial Applicability

Cellulose fine fibers to be produced by the production method of the present invention can be utilized in various composite materials and coating agents, and can also be utilized by being formed into a sheet or a film.

## Claims

1. A method of producing cellulose fine fibers, comprising impregnating cellulose with formic acid or a high-concentration formic acid aqueous solution to fibrillate the cellulose.

2. A method of producing cellulose fine fibers, comprising impregnating cellulose with a fibrillation solution containing an aprotic solvent having a donor number of 26 or more and formic acid or a high-concentration formic acid aqueous solution to fibrillate the cellulose.

3. A method of producing surface-modified cellulose fine fibers, comprising impregnating cellulose with a modification-reactive fibrillation solution, which is obtained by adding a cellulose modification reaction agent to formic acid, a

high-concentration formic acid aqueous solution, or the fibrillation solution of claim 2, to fibrillate the cellulose.

**4.** The production method according to claim 3, wherein the cellulose modification reaction agent comprises at least one kind selected from a carboxylic acid halide, a carboxylic acid anhydride, a carboxylic acid, an isocyanate, and an epoxy.

**5.** The production method according to any one of claims 1 to 4, wherein a weight ratio of the cellulose to the formic acid or the high-concentration formic acid aqueous solution, of the cellulose to the fibrillation solution of claim 2, or of the cellulose to the modification-reactive fibrillation solution of claim 3 is from 0.5/99.5 to 25/75.

[Fig.1]

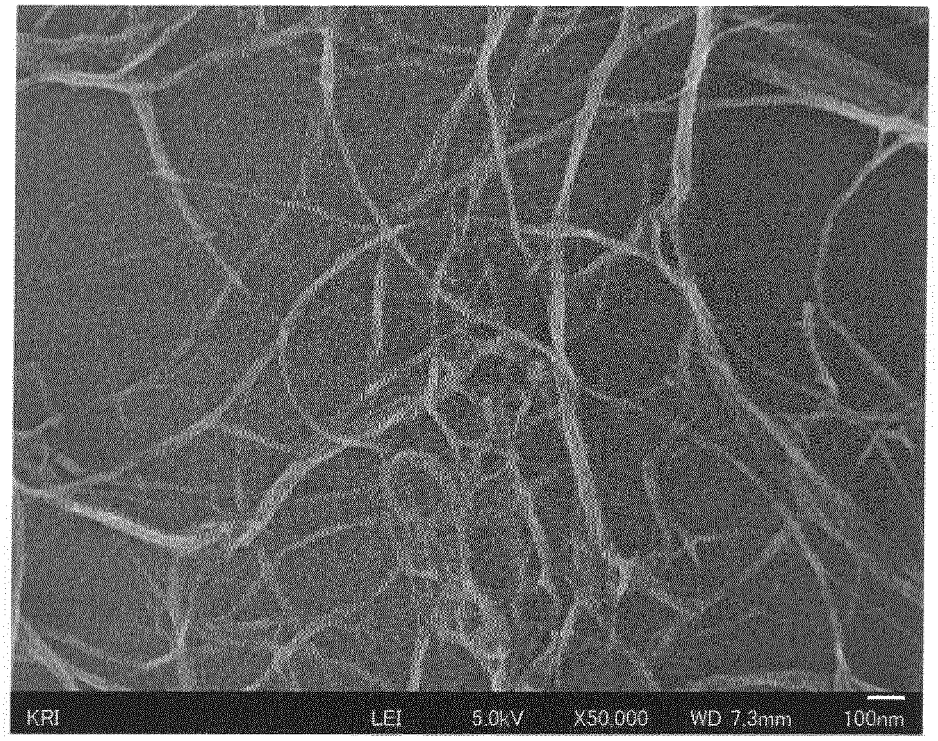
KRI
LEI
5.0kV
X50,000
WD 7.3mm
100nm

[Fig.2]

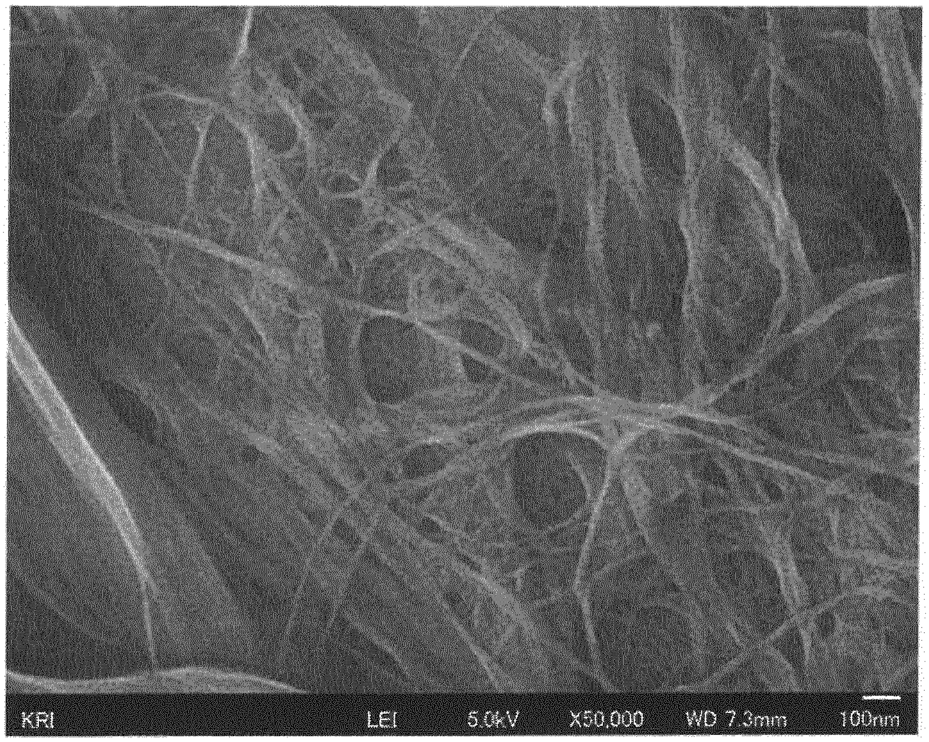
KRI
LEI
5.0kV
X50,000
WD 7.3mm
100nm

[Fig.3]

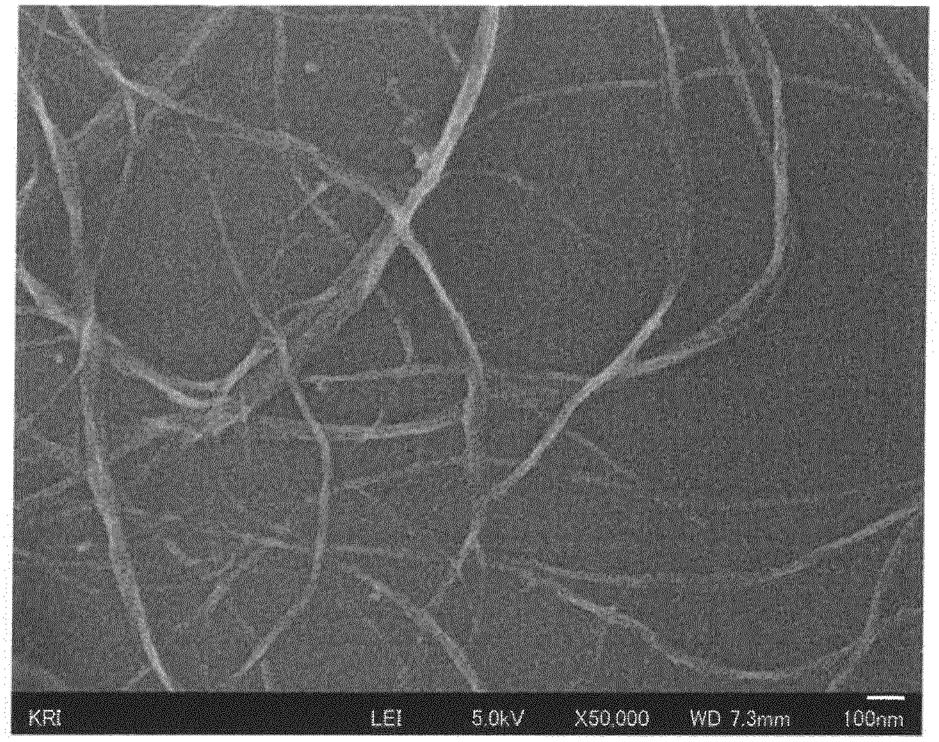
KRI
LEI
5.0kV
X50,000
WD 7.3mm
100nm

[Fig.4]

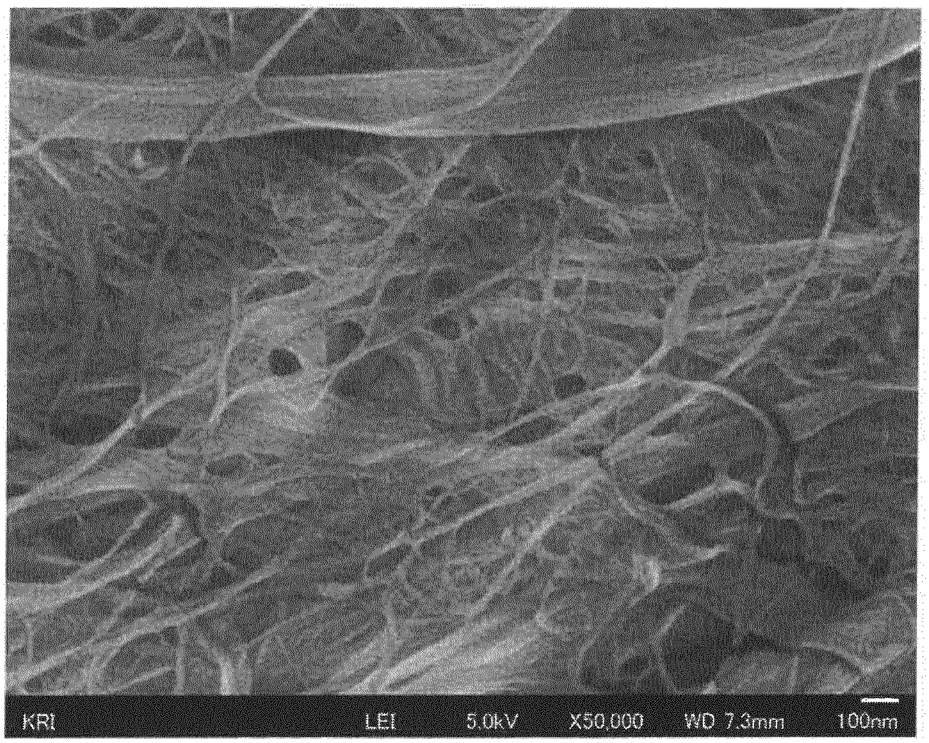
KRI
LEI
5.0kV
X50,000
WD 7.3mm
100nm

[Fig.5]

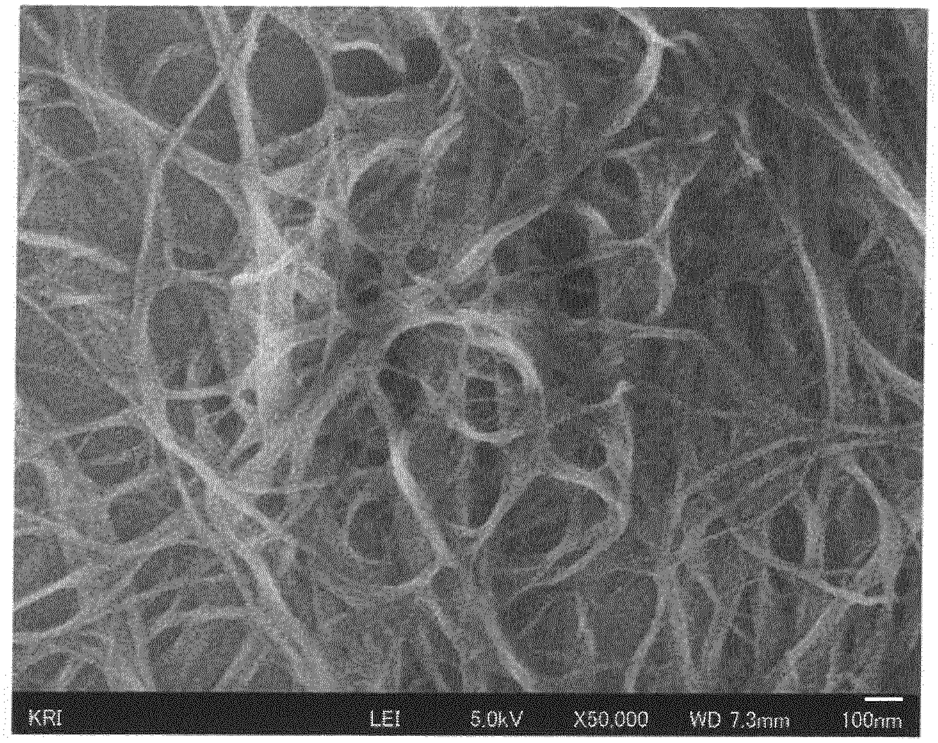
KRI
LEI
5.0kV
X50,000
WD 7.3mm
100nm

[Fig.6]

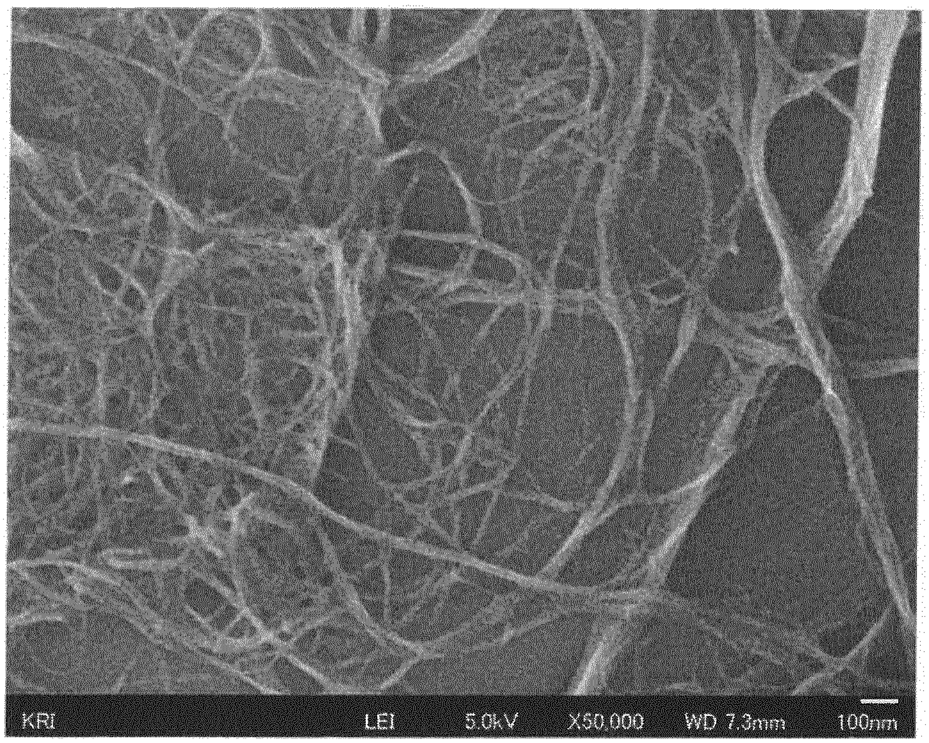
KRI
LEI
5.0kV
X50,000
WD 7.3mm
100nm

## INTERNATIONAL SEARCH REPORT

International application No.
PCT/JP2017/012627

A. CLASSIFICATION OF SUBJECT MATTER
*D21H11/18*(2006.01)i, *C08B15/08*(2006.01)i

According to International Patent Classification (IPC) or to both national classification and IPC

B. FIELDS SEARCHED

Minimum documentation searched (classification system followed by classification symbols)
D21B1/00-1/38;D21C1/00-11/14;D21D1/00-99/00;D21F1/00-13/12;D21G1/00-9/00;
D21H11/00-27/42;D21J1/00-7/00, D01F1/00-6/96;9/00-9/04, C08B1/00-37/18

Documentation searched other than minimum documentation to the extent that such documents are included in the fields searched
Jitsuyo Shinan Koho 1922-1996 Jitsuyo Shinan Toroku Koho 1996-2017
Kokai Jitsuyo Shinan Koho 1971-2017 Toroku Jitsuyo Shinan Koho 1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2014-520182 A (UPM-Kymmene Corp.), 21 August 2014 (21.08.2014), claims; paragraphs [0087] to [0089] & US 2014/0110070 A1 claims; paragraphs [0089] to [0091] & WO 2012/168562 A1 & EP 2718329 A1 & CN 103748116 A | 1,2,5 |
| X | JP 10-511147 A (SIEGLE, Sven), 27 October 1998 (27.10.1998), claims; page 12 & US 6183597 B1 claims; column 5, line 57 to column 6, line 34 & WO 1996/035013 A1 & EP 823948 A1 & CN 1183126 A | 1,5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 May 2017 (26.05.17) | 06 June 2017 (06.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/012627

C (Continuation). DOCUMENTS CONSIDERED TO BE RELEVANT

| Category* | Citation of document, with indication, where appropriate, of the relevant passages | Relevant to claim No. |
|---|---|---|
| X | JP 55-051890 A (Director General, Agency of Industrial Science and Technology), 15 April 1980 (15.04.1980), claims; examples (Family: none) | 1,5 |
| A | JP 2012-012713 A (Oji Paper Co., Ltd.), 19 January 2012 (19.01.2012), entire text (Family: none) | 1-5 |
| A | JP 2010-235687 A (Nippon Paper Industries Co., Ltd.), 21 October 2010 (21.10.2010), entire text & US 2012/0009661 A1 & WO 2010/116795 A1 & EP 2415821 A1 & CN 102361915 A | 1-5 |
| A | JP 2001-342353 A (Masamitsu FUNAOKA), 14 December 2001 (14.12.2001), entire text & WO 2001/074949 A1 & EP 1273632 A1 | 1-5 |
| A | JP 2011-208286 A (Shinshu University), 20 October 2011 (20.10.2011), entire text (Family: none) | 1-5 |
| A | US 2014/0200335 A1 (NANO-GREEN BIOREFINERIES INC.), 17 July 2014 (17.07.2014), Whole document & WO 2013/000074 A1 & EP 2726670 A1 & CN 103635628 A | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010104768 A
- JP 2015500354 A
- JP 2011016995 A
- WO 2012124652 A1
- WO 2014142166 A1


### Non-patent literature cited in the description


- *Netsu Sokutei,* vol. 28 (3), 135-143
- *Biomacromolecules,* 2007, vol. 8, 1973-1978
- *Textile Res. J.,* 1959, vol. 29, 786-794